# FASCICULE DE BREVET EUROPEEN

(11) **EP 0 508 891 B1**
(45) Date de publication et mention de la délivrance du brevet: **21.06.1995**
(21) Numéro de dépôt: 92400982.2
(22) Date de dépôt: 08.04.1992
(51) Int. Cl.: F02M 51/02, F02M 69/46, F02D 41/18, G01K 1/14

(54) **Procédé de fabrication d'un dispositif de contrôle d'admission d'air pour véhicules automobiles comprenant une thermistance destinée à mesurer la température de l'air admis et ensemble obtenu à l'aide de ce procédé**
Verfahren zur Herstellung einer Vorrichtung zur Kontrolle der Ansaugluft eines Kraftfahrzeuges mit einem Thermistor zur Messung der Temperatur der Ansaugluft und nach diesem Verfahren hergestellte Vorrichtung
Method of making a device for controlling the intake air of motor vehicles comprising a thermistor for measuring the temperature of the intake air and device made according to this method

(30) Priorité: 08.04.1991 FR 9104254
(43) Date de publication de la demande: 14.10.1992
(73) Titulaire: JAEGER, F-92303 Levallois-Perret (FR)
(72) Inventeur: Jaunet, Jean-Claude, F-91370 Verrières le Buisson (FR)
(74) Mandataire: Schrimpf, Robert

(56) Documents cités:
- EP-A- 0 222 081
- DE-A- 2 921 787
- DE-A- 3 934 759
- FR-A- 2 468 895
- US-A- 3 788 143

## Description

La présente invention concerne le domaine de l'injection de carburant sur véhicules automobiles.

La présente invention concerne plus précisément procédé de fabrication d'un dispositif de contrôle d'admission d'air pour systèmes d'injection de carburant comportant des moyens de mesure de la température de l'air admis et un ensemble de contrôle d'admission d'air obtenu par la mise en oeuvre de ce procédé.

On a déjà proposé différents dispositifs d'injection de carburant équipés de moyens de mesure de la température de l'air.

Le Document FR-A-2468 895 décrit un ensemble obtenu à l'aide d'un procédé conforme au préambule de la revendication 1, et du type défini dans le préambule de la revendication 5, formant capteur de température de l'air à l'admission d'un moteur à combustion interne comportant une plaquette munie par dépôt d'une résistance sensible à la température et un support en matière thermoplastique, surmoulé sur une partie au moins des fils de connexion de la résistance et sur la plaquette, le support étant adapté pour être logé dans un passage radial formé dans un conduit d'air de sorte que la thermistance soit placée dans ce conduit.

La mesure de la température de l'air permet selon des paramètres connus de l'homme de l'art, de réguler l'injection, la densité de l'air étant fonction de sa température.

Toutefois, les différents dispositifs d'injection de carburant équipés de moyens de mesure de la température de l'air, jusqu'ici proposés ne donnent pas satisfaction. Ils sont souvent de structure complexe et couteuse.

La présente invention a pour but de perfectionner les dispositifs existants.

Ce but est atteint selon la présente invention grâce à un ensemble, un dispositif de contrôle et un procédé du type dèfini dans le jeu de revendications annexé.

Ces caractéristiques permettent d'implanter aisément la thermistance sur le corps de papillon, malgré la place disponible limitée dans le sens radial compte-tenu de la présence indispensable sur le corps de papillon d'un capteur de position destiné à détecter la position du papillon.

D'autres caractéristiques, buts et avantages de la présente invention apparaîtront à la lecture de la description détaillée qui va suivre et en regard des dessins annexés donnés à titre d'exemple non limitatif et sur lesquels :
- la figure 1 représente une première vue latérale d'un sous-ensemble conforme à la présente invention comprenant une thermistance, un support surmoulé et un connecteur,
- la figure 2 représente une seconde vue latérale, orthogonale à la première vue précitée, du même sous-ensemble,
- la figure 3 représente une vue de dessus d'un corps de papillon recevant ce sous-ensemble,
- la figure 4 représente une vue en coupe d'un moule conçu pour former le support surmoulé sur les fils de connexion de la thermistance,
- la figure 5 représente une vue partiellement en coupe, et selon un plan de joint principal du même moule, conforme au plan référencé V-V sur la figure 4,
- la figure 6 représente une vue selon un autre plan de joint secondaire référencé VI-VI sur la figure 4 du même moule, et
- les figures 7 et 8 représentent deux modes de pliage des fils de connexion de la thermistance.

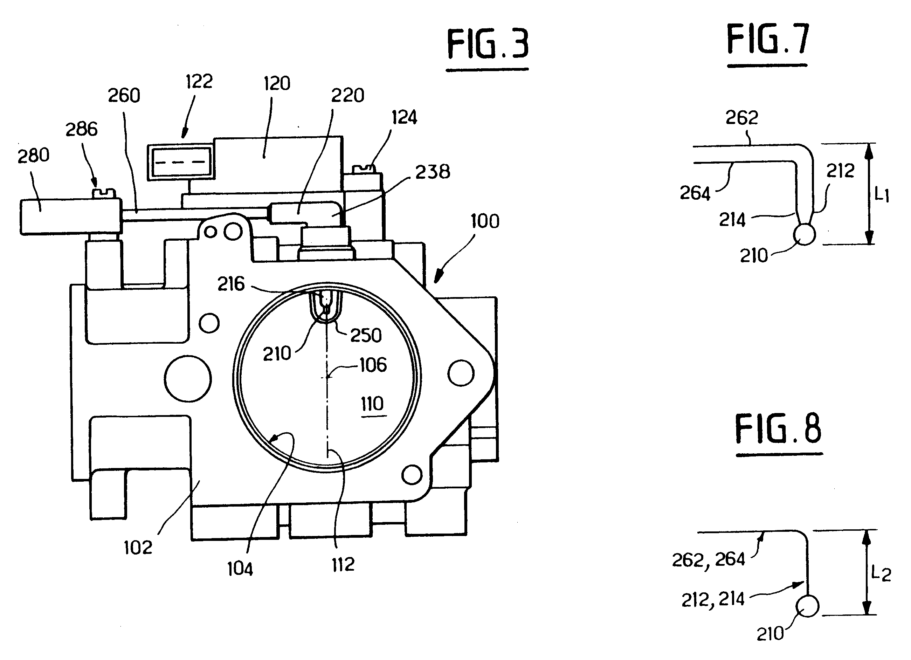

On a représenté schématiquement sur la figure 3 annexée un corps de papillon 100.

Le corps de papillon 100 peut faire l'objet de nombreux modes de réalisation. Pour cette raison, il ne sera pas décrit dans le détail par la suite.

De préférence, le corps de papillon 100 est formé d'un bloc de métal 102 moulé ou usiné, possédant un canal principal d'admission d'air 104. Le canal 104 est cylindrique et centré autour d'un axe 106 qui s'étend perpendiculairement au plan de la figure 3. Le canal 104 peut présenter typiquement un diamètre de 42 à 56mm, selon le type de moteur.

Le canal principal d'admission d'air est muni d'un papillon 110. Le papillon 110 est formé d'un disque complémentaire de la section droite du canal 104. Le papillon 110 est monté à pivotement dans le canal 104 autour d'un axe 112. L'axe de pivotement 112 est orthogonal à l'axe 106 du canal 104. Il correspond par conséquent à un diamètre du disque 110. Le papillon 110 est commandé à pivotement autour de l'axe 112 par tout moyen classique approprié. Lorsque le papillon 110 s'étend perpendiculairement à l'axe 106, le débit d'air dans le canal 104 est interrompu. Par contre, lorsque le papillon 110 s'étend parallèlement à l'axe 106, le débit d'air dans le canal 104 est maximum. Bien entendu, le débit d'air peut être modulé en plaçant le papillon 110 dans une position intermédiaire entre la position d'obturation orthogonale à l'axe 106 du canal 104 et la position d'ouverture maximale parallèle à l'axe 106.

Comme représenté sur la figure 3, un capteur 120 détecte la position angulaire du papillon 110. L'information issue du capteur 120, est représentative du débit d'air et utilisée pour piloter l'injection.

Le capteur 120 est de préférence actionné par les moyens d'entraînement du papillon 110 ou l'axe support de celui-ci. Le capteur 120 peut faire l'objet de différents modes de réalisation. Il peut s'agir par exemple d'un potentiomètre ou d'un capteur optique. Les capteurs de position angulaire associés au papillon sont connus en eux-mêmes de l'homme de l'art et ne seront donc pas décrits par la suite.

Sur la figure 3, on a référencé 122 le connecteur de sortie du capteur de position 120 destiné à être raccordé à l'ensemble pilotant l'injection. On a par ailleurs référencé 124 sur la figure 3, une vis destinée à fixer le capteur 120 sur le bloc 102 du corps de papillon.

On comprend à l'examen de la figure 3 que la place disponible entre le capteur angulaire 120 et la surface externe du bloc 102 de corps de papillon est fort limitée, pour implanter la thermistance. L'espace disponible est généralement au maximum de 6mm.

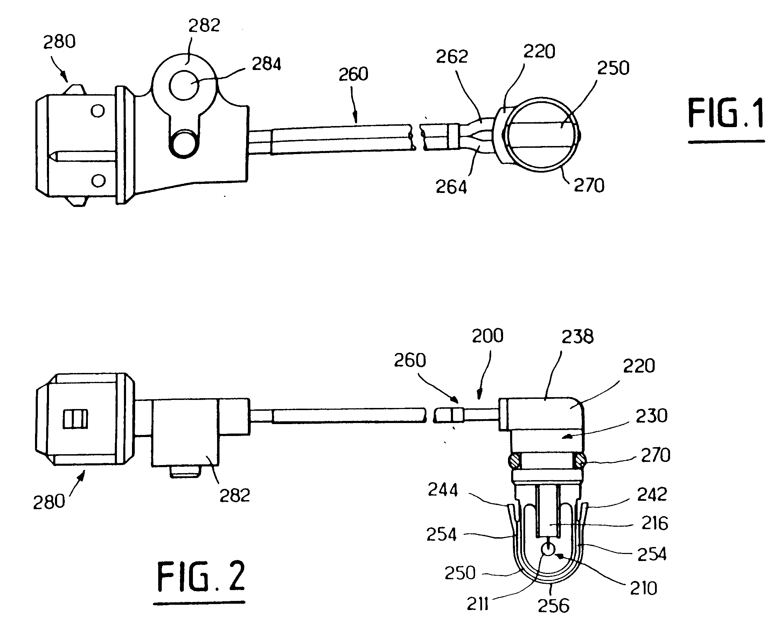

On a représenté sur les figures 1 et 2, un ensemble 200 conforme à la présente invention comprenant essentiellement une thermistance 210, un support surmoulé 220, un joint torique 270 et un connecteur 280.

L'ensemble 200 a pour fonction de supporter la thermistance 210 et de relier les deux fils de connexion 212, 214, de celle-ci au moyen commandant l'injection.

Comme indiqué précédemment, selon la caractéristique principale de la présente invention, le support 220 est réalisé en matériau thermoplastique. Il s'agit de préférence de polyamide 6.6. Celui-ci est avantageusement chargé de fibres de verre, typiquement à 30%.

Le support 220 est surmoulé sur une partie au moins des deux fils de connexion 212, 214, de la thermistance 210. Il est destiné à être logé de façon étanche dans un passage formé dans le corps de papillon. Plus précisément, ce passage s'étend au moins sensiblement radialement par rapport à l'axe 106 du canal 104 et débouche dans ce dernier.

Ainsi comme représenté sur la figure 3, lorsque le support 220 est placé dans le passage radial précité, la thermistance 210 est placée dans le canal principal d'admission d'air 104. Elle peut ainsi détecter la température de l'air admis.

Plus précisément encore, le support 220 est conçu pour présenter un encombrement minimum afin d'être placé entre la surface externe du bloc 102 de corps de papillon et le capteur de position 120.

On va maintenant décrire la structure du mode de réalisation préférentiel du support surmoulé 220 représenté sur les figures annexées.

Le support 220 comprend principalement un corps 230 et un arceau de protection 250.

Le corps 230 est généralement cylindrique de révolution autour d'un axe 232. A l'utilisation, cet axe 232 est centré sur le passage radial ménagé dans le corps de papillon 100. On notera à l'examen des figures annexées que le corps 230 est muni d'une gorge annulaire extérieure 234. Cette gorge est destinée à recevoir le joint annulaire 270. Ce joint fait saillie sur l'extérieur du corps 230, comme cela est visible notamment sur la figure 2. Ainsi, le joint torique 270 vient reposer contre la surface interne du passage radial recevant le support 220 et assure l'étanchéité entre celui-ci et le corps de papillon 100.

L'arceau de protection 250 est destiné à protéger la thermistance 210. Il entoure par conséquent, celle-ci. L'arceau de protection 250 est venu de moulage sur la face avant 236 du corps 230.

L'arceau 250 comprend essentiellement deux branches, 254, et un pontet de liaison 256. Les branches 254, sont généralement rectilignes, parallèles entre elles et parallèles à l'axe 232. Elles sont symétriques et diamétralement opposées par rapport à cet axe 232.

Le pontet de liaison 256 s'étend transversalement à l'axe 232. Il relie les extrémités des branches 254, qui sont opposées au corps 230. Le pontet de liaison 256 a de préférence la forme générale d'un demi-tore.

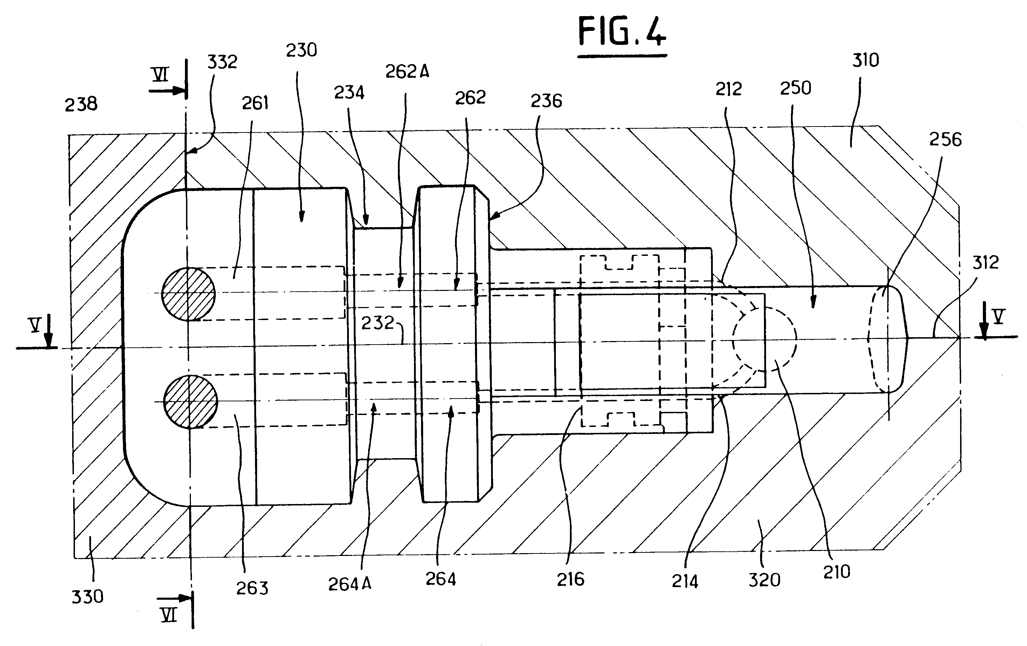

La thermistance 210 est placée dans l'arceau de protection 250. La thermistance 210 comprend une perle 211 de matériau thermorésistif et deux fils de sortie 212, 214. Les deux fils de sortie 212, 214, sont reliés respectivement à deux fils de liaison 262, 264, d'un câble 260. La liaison entre les fils de sortie 212, 214, et les fils de liaison 262, 264 est obtenue par toute technique classique appropriée. Il peut s'agir par exemple d'un sertissage. Toutefois, de préférence, les fils de sortie 212, 214 sont reliés par soudure aux fils de liaison 262, 264. On aperçoit sur la figure 4, les enrobages électriquement isolants individuels 261, 263, des fils de liaison 262, 264.

Les fils de sortie 212, 214, s'étendent essentiellement parallèlement entre eux et parallèlement à l'axe 232. Ils sont symétriques et diamétralement opposés par rapport à celui-ci.

Les fils de liaison 262, 264, prolongent les fils de sortie 212, 214. A partir de ceux-ci, ils présentent chacun une première partie 262A, 264A, qui s'étend de façon rectiligne. Les parties 262A, 264A des fils de liaison 262, 264 sont parallèles entre elles et parallèles à l'axe 232 en étant diamétralement opposées par rapport à l'axe 232. Toutefois, les fils de liaison 262, 264, présentent, à l'intérieur du support surmoulé 220 des coudes 262B, 264B, sensiblement à 90°. Au-delà des coudes 262B, 264B, les fils de liaison 262, 264, se prolongent par des secondes parties généralement rectilignes 262C, 264C. Ainsi, à l'utilisation, les premières parties 262A, 264A, sont disposées sensiblement radialement par rapport à l'axe 106 du canal principal d'admission d'air 104. Par contre, les secondes parties 262C, 264C, des fils de liaison 262, 264, s'étendent sensiblement dans un même plan parallèle à l'axe 106.

Plus précisément selon les figures annexées, les secondes parties 262C, 264C des fils de liaison 262, 264, s'étendent généralement transversalement à l'axe 106. Les secondes parties 262C et 264C pourraient aussi s'étendre sensiblement parallèlement à l'axe 106 ou toute position intermédiaire.

Le talon 238 du corps 230 formé sur les coudes 262B, 264B, est arrondi.

Par ailleurs, on notera à l'examen des figures annexées, la présence de moyens d'encliquetage 240 sur le support surmoulé 220. Ces moyens d'encliquetage 240 sont destinés à venir en prise avec le corps de papillon 100 pour immobiliser le support 220 et la thermistance 210 associée, sur le corps de papillon 100.

Les moyens d'encliquetage 240 peuvent faire l'objet de différentes variantes de réalisation.

Selon le mode de réalisation préférentiel représenté sur les figures annexées, ces moyens d'encliquetage 240 sont formés de deux languettes élastiques 242, 244, symétriques, venues de moulage sur la surface extérieure 255 de chaque branche 254 de l'arceau de protection.

Ces deux languettes 242, 244, se raccordent aux branches 254 à distance du corps 230. Elles s'étendent vers ce dernier en direction de leur extrémité libre. Les languettes 242, 244, possèdent chacune une surface externe 241, 245, qui divergent par rapport à l'axe 232, en direction de leur extrémité libre. Les extrémités libres des languettes 242, 244, adjacentes au corps 230 sont délimitées par des surfaces planes 243, 246, transversales à l'axe 232. Ainsi, au repos, les surfaces extérieures 241, 245, des languettes 242, 244, font saillie sur l'extérieur des branches 254 et du corps 230. Lorsque l'arceau 250 est engagé dans le passage radial formé dans le corps de papillon 100, les languettes 242, 244, fléchissent élastiquement en rapprochement des branches 254. Elles reprennent leur forme initiale dès que les surfaces extrêmes 243, 246, des languettes 242, 244, ont franchi la paroi du corps de papillon 100. Les languettes 242, 244, ainsi encliquetées sur le corps de papillon 100 interdisent un retrait non intentionnel du support 220 et de la thermistance 210.

Toutefois, si cela est nécessaire, par exemple pour la maintenance du système, les languettes 242, 244, peuvent être déformées élastiquement en rapprochement des branches 254, pour autoriser le retrait du support 220 et de la thermistance 210.

Comme représenté sur la figure 3, les branches 254 de l'arceau de protection sont disposées symétriquement de part et d'autre d'un plan passant par l'axe 106 du canal 104, pour ne pas occulter le flux d'air, de sorte que celui-ci passe directement sur la thermistance 210 pour permettre une détection fiable de la température de l'air admis. En d'autres termes, après implantation sur le corps de papillon 100, l'arceau de protection 250 s'étend sensiblement dans un plan perpendiculaire à l'axe 106, et non pas dans un plan parallèle à celui-ci.

Comme représenté sur la figure 7, on pourrait envisager de placer les deux fils de liaison 262, 264, et les deux fils de sortie 212, 214, dans un même plan perpendiculaire à l'axe 106. Dans ce cas, les coudes 262B, 264B, présenteraient des rayons de courbure différents. Toutefois, une telle disposition conduit à un encombrement radial important, référencé L1 sur la figure 7, entre la thermistance 210 et le fil de liaison 262 le plus externe.

Pour limiter cet encombrement, la demanderesse préconise de donner aux deux coudes 262B, 264B, des rayons de courbure identiques, comme représenté sur la figure 8. Ainsi les secondes parties 262C, 264C des fils de liaison sont placées dans un même plan parallèle à l'axe 106.

De ce fait, l'encombrement radial référencé L2 sur la figure 8 est alors inférieur à l'encombrement L1 précité représenté sur la figure 7.

De plus, les deux fils 262, 264 sont ainsi de même ongueur.

Pour former le support surmoulé 220, on procède de préférence comme suit.

Dans un premier temps, un bloc 216 de matériau thermoplastique est surmoulé sur les extrémités des fils de liaison 212, 214. Le bloc 216 a par exemple la forme d'un parallélépipède rectangle. Il est de préférence réalisé dans le même matériau que le support 220. Le bloc 216 est avantageusement formé de polyamide 6.6 chargé à 30% de fibres de verre.

Dans un second temps, les fils de liaison 262, 264, sont fixés, par exemple, par soudure sur les fils de sortie 212, 214.

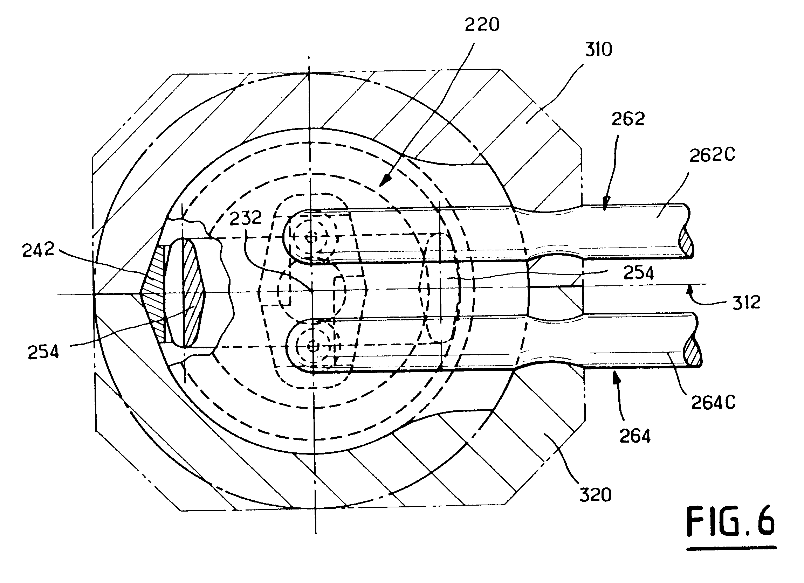

Puis dans un troisième temps, l'ensemble formé par les fils de liaison 262, 264, la thermistance 210 et ses fils de sortie 212, 214 ainsi que le bloc surmoulé 216 est placé dans le moule 300 représenté sur les figures 4, 5 et 6.

Le bloc surmoulé 216 est utilisé pour supporter et positionner la thermistance 210 avec précision dans le moule 300.

Bien entendu, le moule 300 définit une cavité 302 complémentaire du support 220 à réaliser.

La demanderesse a constaté que le volume du support 220 étant limité, la masse thermique de la matière chaude formant ce support est trop faible pour détériorer les soudures précédemment établies entre les fils de liaison 262, 264, et les fils de sortie 212, 214.

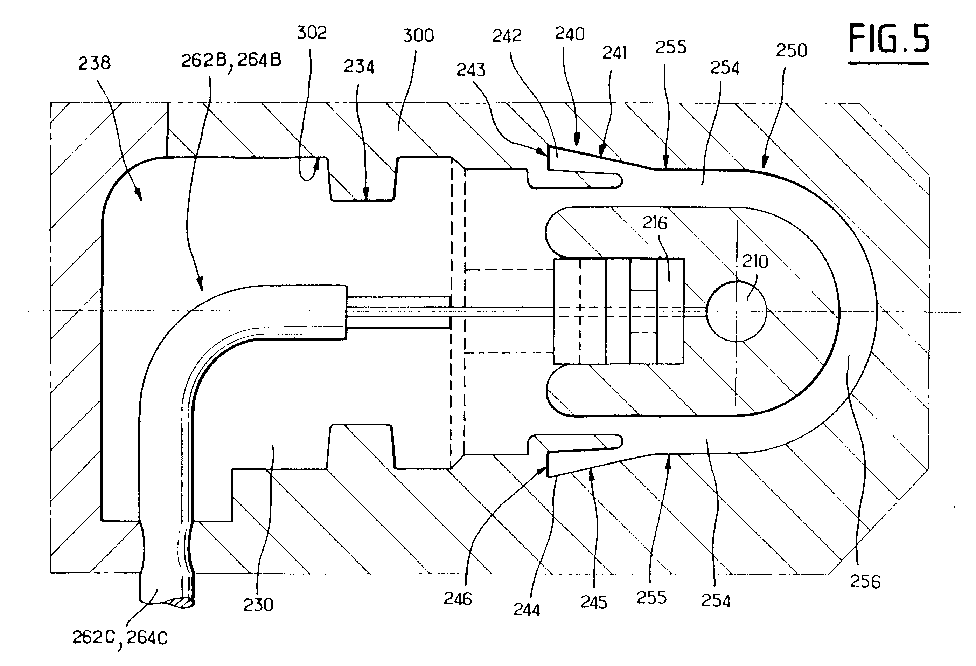

Le moule 300 comprend deux coquilles principales 310, 320, symétriques qui se rejoignent au niveau d'un plan de joint 312 qui coïncide avec le plan de la figure 5. Les deux coquilles 310, 320 délimitent l'essentiel du corps 230, ainsi que l'arceau de protection 250 et les languettes élastiques 242, 244.

Le déplacement relatif entre les deux coquilles principales 310, 320 est donc un mouvement de translation perpendiculairement au plan de joint 312, soit dans le plan de juxtaposition des fils de sortie 212, 214.

Le moule 300 comprend par ailleurs, un tiroir auxiliaire 330 qui forme le talon 238 du corps 230. Le tiroir auxiliaire 330 se raccorde aux coquilles principales 310, 320 par un plan de joint 332 orthogonal à l'axe 232 et parallèle aux parties 262C, 264C des fils de liaison 262, 264.

Le tiroir auxiliaire 330 est déplacé, par rapport aux coquilles principales 310, 320 par translation parallèlement à l'axe 232.

Enfin, de préférence, le moule 300 comprend un tiroir additionnel placé entre les coquilles principales 310, 320, dans la zone où les fils de liaison 262, 264, émergent du talon 238. Ce tiroir additionnel a pour but de remplir l'espace entre les fils de liaison 262, 264.

Comme indiqué précédemment, un corps de connecteur 280 est surmoulé sur les extrémités des fils de liaison 262, 264, qui sont opposées au support 220. Le corps de connecteur 280 peut faire l'objet de nombreux modes de réalisation. Il ne sera donc pas décrit en détail par la suite.

On notera que selon le mode de réalisation représenté sur les figures 1 à 3 annexées, le corps de connecteur 280 comprend un fourreau 282 définissant un canal 284 grâce auquel le corps de connecteur 280 peut être fixé sur le corps de papillon 100 à l'aide d'une vis 286.

Bien entendu le corps de connecteur 280 peut être fixé sur le corps de papillon 100 par d'autres moyens.

On notera à l'examen de la figure 3 que le boîtier du capteur de position 120 protège le support 220 et participe au maintien de celui-ci sur le corps de papillon 100.

De préférence, le corps de connecteur 280 et le support 220 sont moulés séparément, du fait que selon le type de moteur ou de véhicule concerné, la géométrie du connecteur 280 peut varier.

Toutefois, on peut envisager de réaliser le corps de connecteur 280 et le support 220 au cours d'une même opération de surmoulage. Dans ce cas, le corps surmoulé couvre également le câble 260. Cette disposition peut être avantageuse pour protéger le câble 260.

De préférence, une gaine thermoplastique est enfilée sur le câble 260, lorsque celui-ci n'est pas muni d'un surmoulage.

On peut aussi envisager de réaliser un support 220 de thermistance venu de moulage avec le boîtier du capteur de position 120.

L'objet de la présente invention s'applique en particulier aux systèmes d'injection multipoint, c'est-à-dire les systèmes comprenant un injecteur par cylindre en aval du papillon de contrôle d'admission d'air.

Bien entendu, la thermistance 210 et l'arceau de protection 250 doivent être placés à distance de l'axe 106 de pivotement du papillon 110, pour ne pas interférer avec le trajet en déplacement de ce dernier.

De préférence, il est prévu des moyens limitant le déplacement du support 220 vers l'intérieur du canal principal 104. Ces moyens peuvent être formés par le talon 238 du support 220. Ils peuvent également être formés, comme représenté sur la figure 4, par la face avant 236 du corps 230 venant reposer contre une surface d'appui homologue formee au niveau du passage radial ménagé dans le corps de papillon 100.

## Revendications

1. Procédé de fabrication d'un ensemble de contrôle d'admission d'air pour un système d'injection de véhicule automobile, du type comprenant les étapes consistant à :
- relier électriquement les fils de sortie (212, 214) d'une thermistance (210) à des fils de liaison (262, 264), et
- placer la thermistance (210) dans un moule pour surmouler un support (220) en matière thermoplastique sur une partie au moins des deux fils de liaison (262, 264) de la thermistance (210), adapté pour être logé dans un passage radial formé dans un corps de papillon (100) possédant un canal principal (104) d'admission d'air et débouchant dans ledit canal principal (104) d'admission d'air de sorte que la thermistance (210) soit placée dans le canal principal (104) d'admission d'air, caractérisé par le fait qu'il comprend en outre l'étape consistant à surmouler un bloc de matière thermoplastique (216) sur les fils de sortie (212, 214) de la thermistance, avant de placer la thermistance (210) et ledit bloc de matière thermoplastique (216) dans le moule pour surmouler le support (220) de sorte que ce bloc de matière thermoplastique (216) supporte et positionne la thermistance (210) avec précision dans le moule, le support (220) étant adapté pour être logé de façon étanche dans le passage radial.

2. Procédé de fabrication selon la revendication 1, caractérisé par le fait que le bloc de matière thermoplastique (216) et le support (220) sont formés dans le même matériau.

3. Procédé de fabrication selon l'une des revendications 1 et 2, caractérisé par le fait que le bloc de matière thermoplastique (216) et le support (220) sont formés en polyamide 6.6 chargé de fibres de verre.

4. Procédé de fabrication selon l'une des revendications 1 à 3, caractérisé par le fait que l'étape de surmoulage du support (220) utilise un moule (300) comprenant deux coquilles principales (310, 320) possédant un plan de joint, un premier tiroir (330) délimitant le talon du support (220) et déplaçable parallèlement au plan de joint des coquilles principales (310, 320) et un tiroir additionnel déplaçable également parallèlement au plan de joint des coquilles principales (310, 320) et placé entre les fils de connexion (262, 264).

5. Ensemble de contrôle d'admission d'air pour un système d'injection de véhicule automobile, obtenu par la mise en oeuvre du procédé conforme à l'une des revendications 1 à 4, comprenant une thermistance (210), des fils de liaison (262, 264) reliés aux fils de sortie (212, 214) de la thermistance, et un support de thermistance (220), en matière thermoplastique, surmoulé sur une partie au moins des deux fils de liaison (262, 264) de la thermistance (210), le support de thermistance (220) étant adapté pour être logé dans un passage radial formé dans un corps de papillon (100), de sorte que la thermistance (210) soit placée dans le canal principal d'admission d'air (104) du corps de papillon (100), caractérisé par le fait qu'il comprend en outre un bloc de matière thermoplastique (216) surmoulé sur les fils de sortie (212 214) de la thermistance (210) avant le support (220), et par le fait que le support (220) est adapté pour être logé de façon étanche dans le passage radial du corps de papillon (100).

6. Ensemble selon la revendication 5, caractérisé par le fait que les deux fils de liaison (262, 264) de la thermistance (210) possèdent chacun un coude (262B, 264B) sensiblement à 90°, dans le corps du support surmoulé (220).

7. Ensemble selon l'une des revendications 5 ou 6, caractérisé par le fait que le support (220) surmoulé sur les fils de liaison (262, 264) de la thermistance (210) possède des moyens d'encliquetage (240) sur le corps de papillon (100).

8. Ensemble selon la revendication 7, caractérisé par le fait que les moyens d'encliquetage (240) sont formés de deux languettes élastiques (242, 244) venues de moulage.

9. Ensemble selon l'une des revendications 5 à 8, caractérisé par le fait qu'un joint torique (270) est placé sur le support surmoulé (220).

10. Ensemble selon l'une des revendications 5 à 9, caractérisé par le fait qu'un arceau de protection (250) venu de moulage sur le support (220) entoure la thermistance (210).

11. Ensemble selon l'une des revendications 7 et 8 prises en combinaison avec la revendication 10, caractérisé par le fait que les moyens d'encliquetage (240) sont prévus sur les branches (254) de l'arceau de protection (250).

12. Ensemble selon l'une des revendications 5 à 11, caractérisé par le fait que le corps du support surmoulé (220) est réalisé en polyamide 6.6, de préférence chargé de fibres de verre.

13. Ensemble selon l'une des revendications 5 à 12 caractérisé par le fait qu'un connecteur (280) est formé sur les extrémités des fils de liaison (262, 264) opposées au support surmoulé (220).

14. Ensemble selon la revendication 13, caractérisé par le fait que le connecteur (280) est venu de moulage avec le support surmoulé (220).

15. Ensemble selon la revendication 6, caractérisé par le fait que les deux fils (262, 264) possèdent des rayons de courbures identiques.

16. Dispositif de contrôle d'admission d'air pour un système d'injection de véhicules automobiles, comprenant un corps de papillon (100) possédant un canal principal (104) d'admission d'air, un papillon (110) régulateur de débit placé dans le canal principal (104) et un passage sensiblement radial débouchant dans le canal principal d'admission d'air, caractérisé en ce qu'il comprend de plus un ensemble conforme à l'une des revendications 5 à 15 placé dans ce passage radial.

## Claims

1. A method of manufacturing an air admission control system for an injection system in a motor vehicle, the method being of the type comprising the steps consisting in:
electrically connecting output wires (212, 214) of a thermistor (210) to connection wires (262, 264); and
placing the thermistor (210) in a mold to mold a support (220) of thermoplastic material thereon over at least a first one of the two connection wires (262, 264) of the thermistor (210), the support being adapted to be received in a radial passage formed in a butterfly valve body (100) possessing a main air admission channel (104) and opening out into said main air admission channel (104) in such a manner that the thermistor (210) is placed in the main air admission channel (104), the method being characterized by the fact that it further comprises a step of molding a block of thermoplastic material (216) on the output wires (212, 214) of the thermistor prior to placing the thermistor (210) and said block of thermoplastic material (216) in the mold for molding the support (220) thereon so that said block of thermoplastic material (216) supports and positions the thermistor (210) accurately in the mold, the support (220) being adapted to be received in sealed manner in the radial passage.

2. A method of manufacture according to claim 1, characterized in that the block of thermoplastic material (216) and the support (220) are made of the same material.

3. A method of manufacture according to claim 1 or 2, characterized by the fact that the block of thermoplastic material (216) and the support (220) are made of 6.6 polyamide filled with glass fibers.

4. A method of manufacture according to any one of claims 1 to 3, characterized by the fact that the step of molding on the support (220) makes use of a mold (300) comprising two main shells (310, 320) possessing a join plane, a first slider (330) defining the heel of the support (220) and displaceable parallel to the plane of the join plane of the main shells (310, 320), and an additional slider also displaceable parallel to the join plane of the main shells (310, 320) and placed between the connection wires (262, 264).

5. An air admission control unit for a motor vehicle injection system, obtained by implementing the method according to any one of claims 1 to 4, the unit comprising a thermistor (210), connection wires (262, 264) connected to the output wires (212, 214) of the thermistor, and a thermistor support (220) of thermoplastic material molded onto at least a portion of the two connection wires (262, 264) of the thermistor (210), the thermistor support (220) being adapted to be housed in a radial passage formed in a butterfly valve body (100) such that the thermistor (210) is placed in the main air admission channel (104) of the butterfly valve body (100), the unit being characterized by the fact that it further includes a block of thermoplastic material (216) molded onto the output wires (212, 214) of the thermistor (210) before the support (220), and by the fact that the support (220) is adapted to be received in sealed manner in the radial passage of the butterfly valve body (100).

6. A unit according to claim 5, characterized by the fact that each of the two connection wires (262, 264) of the thermistor (210) possesses a bend (262B, 264B) at substantially right angles in the support body (220) molded thereon.

7. A unit according to claim 5 or 6, characterized by the fact that the support (220) molded on the connection wires (262, 264) of the thermistor (210) posses snap-fastening means (240) for engaging the butterfly valve body (100).

8. A unit according to claim 7, characterized by the fact that the snap-fastening means (240) are formed by two integrally molded resilient tongues (242, 244).

9. A unit according to any one of claims 5 to 8, characterized by the fact that an O-ring (270) is placed on the molded-on support (220).

10. A unit according to any one of claims 5 to 9, characterized by the fact that a protective arc (250) integrally molded with the support (220) surrounds the thermistor (210).

11. A unit according to claim 7 or 8, taken in combination with claim 10, characterized by the fact that the snap-fastening means (240) are provided on the branches (254) of the protective arc (250).

12. A unit according to any one of claims 5 to 11, characterized by the fact that the body of the molded-on support (220) is made of 6.6 polyamide that is preferably filled with glass fibers.

13. A unit according to any one of claims 5 to 12, characterized by the fact that a connector (280) is formed on the ends of the connection wires (262, 264) opposite to the molded-on support (220).

14. A unit according to claim 13, characterized by the fact that the connector (280) is integrally molded with the molded-on support (220).

15. A unit according to claim 6, characterized by the fact that the two wires (262, 264) possess identical radii of curvature.

16. Apparatus for controlling air admission for a motor vehicle injection system, comprising a butterfly valve body (100) possessing a main air admission channel (104), a flow rate regulating butterfly valve member (110) placed in the main channel (104) and a substantially radial passage opening out into the main air admission channel, characterized in that it further comprises a unit according to any one of claims 5 to 15 placed in said radial passage.

## Patentansprüche

1. Verfahren zum Herstellen einer Anordnung zum Steuern des Zutritts der Luft für eine Einspritzanlage eines Kraftfahrzeuges, welches Schritte umfaßt, die darin bestehen, daß
- die Ausgangsdrähte (212, 214) eines Thermistors (210) mit Verbindungsdrähten (262, 264) elektrisch verbunden werden und
- der Thermistor (210) in einer Form zum Gießen eines Halters (220) aus einem thermoplastischem Material an einem Teil wenigstens der beiden Verbindungsdrähte (262, 264) des Thermistors (210) angeordnet wird, der in einem radialen Kanal aufgenommen werden kann, der in einem Klappenventilkörper (100) mit einem Hauptkanal (104) zum Zutritt der Luft ausgebildet ist und der in diesem Hauptkanal (104) zum Zutritt der Luft mündet, derart, daß der Thermistor (210) im Hauptkanal (104) zum Zutritt der Luft angeordnet wird, dadurch gekennzeichnet, daß es einen weiteren Schritt umfaßt, der darin besteht, daß ein Block (216) aus einem thermoplastischen Material auf die Ausgangsdrähte (212, 214) des Thermistors gegossen wird, bevor der Thermistor (210) und der Block (216) aus dem thermoplastischen Material in der Form zum Gießen des Halters (220) angeordnet werden, derart, daß der Block (216) aus einem thermoplastischen Material den Thermistor (110) genau in der Form hält und anordnet, wobei der Halter (220) so ausgebildet ist, daß er dicht im radialen Kanal angeordnet werden kann.

2. Verfahren zum Herstellen nach Anspruch 1, dadurch gekennzeichnet, daß der Block (216) aus einem thermoplastischen Material und der Halter (220) aus dem gleichen Material gebildet werden.

3. Verfahren zum Herstellen nach einem der Ansprüche 1 und 2, dadurch gekennzeichnet, daß der Block (216) aus einem thermoplastischen Material und der Halter (220) aus glasfaserverstärktem Polyamid 6.6 gebildet werden.

4. Verfahren zum Herstellen nach einem der Ansprüche 1 bis 3, dadurch gekennzeichnet, daß der Schritt des Gießens des Halters (220) eine Form (300) verwendet, die zwei Hauptschalen (310, 320), die eine Formteilfläche haben, einen ersten Schieber (330), der die Nase des Halters (220) begrenzt und parallel zur Formteilfläche der Hauptschalen (310, 320) verschiebbar ist, und einen zusätzlichen Schieber umfaßt, der gleichfalls parallel zur Formteilfläche der Hauptschalen (310, 320) verschiebbar ist und zwischen den Verbindungsdrähten (262, 264) angeordnet werden kann.

5. Anordnung zum Steuern des Zutritts der Luft für eine Einspritzanlage eines Kraftfahrzeuges, gebildet nach dem Verfahren nach einem Ansprüche 1 bis 4, mit einem Thermistor (210), Verbindungsdrähten (262, 264), die mit den Ausgangsdrähten (212, 214) des Thermistors verbunden sind, und einem Thermistorhalter (220) aus einem thermoplastischen Material, der auf einen Teil wenigstens der beiden Verbindungsdrähte (262, 264) des Thermistors (210) gegossen ist, welcher Thermistorhalter (220) in einem radialen Kanal angeordnet werden kann, der in einem Klappenventilkörper (100) gebildet ist, derart, daß der Thermistor (210) im Hauptkanal (104) zum Zutritt der Luft des Klappenventilkörpers (100) angeordnet ist, dadurch gekennzeichnet, daß sie weiterhin einen Block (216) aus einem thermoplastischen Material umfaßt, der vor dem Halter (210) auf die Ausgangsdrähte (212, 214) des Thermistors (210) gegossen ist, und daß der Halter (220) so ausgebildet ist, daß er dicht im radialen Kanal des Klappenventilkörpers (100) angeordnet werden kann.

6. Anordnung nach Anspruch 5, dadurch gekennzeichnet, daß die beiden Verbindungsdrähte (262, 264) des Thermistors (210) jeweils eine Krümmung (262B, 264B) im wesentlichen unter 90° im gegossenen Körper des Halters (220) aufweisen.

7. Anordnung nach einem der Ansprüche 5 oder 6, dadurch gekennzeichnet, daß der auf die Verbindungsdrähte (262, 264) des Thermistors (210) gegossene Halter (220) Rasteinrichtungen (240) am Klappenventilkörper (100) aufweist.

8. Anordnung nach Anspruch 7, dadurch gekennzeichnet, daß die Rasteinrichtung (240) als zwei elastische Zungen (242, 244) ausgebildet sind, die durch Gießen gebildet sind.

9. Anordnung nach einem der Ansprüche 5 bis 8, dadurch gekennzeichnet, daß ein O-Ring (270) auf dem gegossenen Halter (220) angeordnet ist.

10. Anordnung nach einem der Ansprüche 5 bis 9, dadurch gekennzeichnet, daß ein Schutzbügel (250), der durch Gießen auf den Halter (220) ausgebildet ist, den Thermistor (210) umgibt.

11. Anordnung nach einem der Ansprüche 7 und 8 in Kombination mit Anspruch 10, dadurch gekennzeichnet, daß die Rasteinrichtung (240) an den Armen (254) des Schutzbügels (250) vorgesehen ist.

12. Anordnung nach einem der Ansprüche 5 bis 11, dadurch gekennzeichnet, daß der Körper des gegossenen Halters (220) aus vorzugsweise glasfaserverstärktem Polyamid 6.6 gebildet ist.

13. Anordnung nach einem der Ansprüche 5 bis 12, dadurch gekennzeichnet, daß eine Steckerverbindung (280) an den Enden der Verbindungsdrähte (262, 264) ausgebildet ist, die dem gegossenen Halter (220) gegenüberliegen.

14. Anordnung nach Anspruch 13, dadurch gekennzeichnet, daß die Steckerverbindung (280) zusammen mit dem gegossenen Halter (220) durch Gießen gebildet ist.

15. Anordnung nach Anspruch 6, dadurch gekennzeichnet, daß die beiden Drähte (262, 264) identische Krümmungsradien haben.

16. Vorrichtung zum Steuern des Zutritts der Luft für eine Einspritzanlage von Kraftfahrzeugen mit einem Ventilklappenkörper (100), der einen Hauptkanal (104) zum Zutritt der Luft aufweist, einem Klappenventil (110) zum Regeln des Durchsatzes, das im Hauptkanal (104) angeordnet ist, und einem im wesentlichen radialen Kanal, der im Hauptkanal zum Zutritt der Luft mündet, dadurch gekennzeichnet, daß sie eine Anordnung nach einem der Ansprüche 5 bis 15 umfaßt, die im radialen Kanal angeordnet ist.
